(19) Europäisches Patentamt
European Patent Office
Office européen des brevets

(11) **EP 4 517 404 A1**

(12) **EUROPEAN PATENT APPLICATION**

(43) Date of publication:
**05.03.2025 Bulletin 2025/10**

(21) Application number: **23193790.5**

(22) Date of filing: **28.08.2023**

(51) International Patent Classification (IPC):
*G02B 21/00* (2006.01)   *G02B 21/06* (2006.01)
*G02B 21/16* (2006.01)   *G02B 27/58* (2006.01)
*G02B 27/09* (2006.01)   *G01N 21/64* (2006.01)

(52) Cooperative Patent Classification (CPC):
**G02B 21/0032; G02B 27/09; G02B 27/0927;
G02B 27/0938; G02B 27/58;** G01N 21/6458;
G01N 2021/6463; G02B 21/0068; G02B 21/0076

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **European Molecular Biology
Laboratory
69117 Heidelberg (DE)**

(72) Inventors:
• **Ries, Jonas**
 **69115 Heidelberg (DE)**
• **Deguchi, Takahiro**
 **69120 Heidelberg (DE)**

(74) Representative: **Sonnenberg Harrison
Partnerschaft mbB
Herzogspitalstraße 10a
80331 München (DE)**

(54) **BEAM SHAPING DEVICE FOR MICROSCOPY**

(57)   An illumination unit (5) for a microscope, comprising a laser light source (10) for providing an illumination light beam (12); an objective lens for illuminating a sample (30); and a beam shaping arrangement (20) for shaping the illumination light beam (12); wherein the beam shaping arrangement (20) comprises
- a phase retarder (44) for generating a first phase shift between two orthogonal polarization components of the illumination light beam (12);
- a spatially variable birefringent element (48) for rotating, dependent on a cross-sectional position of the illumination light beam (12), the two orthogonal polarization components of the illumination light beam (12); and
- a second polarizer (42) for polarizing the illumination light beam (12).

FIG. 1

**Description**

The present disclosure relates to a beam shaping device and a method for shaping an illumination light beam, for microscopy. The present disclosure relates in particular to a beam shaping device and a method for shaping an illumination light beam, for MINFLUX microscopy.

**Background of the disclosure**

MINFLUX microscopy is a superresolution microscopy technology that requires patterned illumination which can be moved about a sample position on the 100 $\mu$s time-scale to localize single molecules by scanning a patterned illumination beam about the molecules. MINFLUX microscopy requires this patterned illumination beam having a local intensity minimum close to zero. Common realizations of the patterned illumination beam have a donut profile, created by means of an angular phase ramp, and a top-hat profile, created by means of a phase delay in the central part of the beam. These patterned illumination beams may be generated with the help of physical phase masks or a spatial light modulator (SLM).

The patterned illumination beam has to be scanned rapidly to different positions in the proximity of the molecule, such as a fluorophore. This is commonly realized by using an electro-optical deflector for both x- and y-scanning. The electro-optical deflector is an costly components with a limited lifetime. On the other hand, z-scanning is performed by means of a deformable mirror which makes the z-scanning slow, or by means of an electro-optically actuated varifocal lens which is a costly component with a limited lifetime).

Another approach to scanning the patterned illumination light beam is using two interfering laser beams to create two half-moon shaped intensity profiles with an intensity minimum in the center, which can be moved quickly by changing a phase of one of the beams by means of an electro-optic modulator. This approach, however, only works for two-dimensional MINFLUX.

A method to generate patterned illumination beams for 3D MINFLUX that are shiftable on the microsecond time scale, robust, of high quality by means of an affordable setup of optical components is missing.

**Summary of the disclosure**

An illumination unit for a microscope comprises a laser light source for providing an illumination light beam; an objective lens for illuminating a sample; and a beam shaping arrangement for shaping the illumination light beam. The beam shaping arrangement comprises a phase retarder for generating a first phase shift between two orthogonal polarization components of the illumination light beam; a spatially variable birefringent element for rotating, dependent on a cross-sectional position of the illumination light beam, the two orthogonal polarization components of the illumination light beam; and a second polarizer for polarizing the illumination light beam.

The phase retarder may be an electro-optic modulator and the first phase shift may be settable and/or adjustable by means of control signals applied to the phase retarder. The phase retarder being an electro-optic modulator enables changing the first phase shift fast.

The control signals may be switchable within less than 1 microsecond. Such switching times are provided by controllers of electro-optic modulators.

The spatially variable birefringent element may comprise an array of elements. The array of elements enables altering the illumination light beam across a cross-section, e.g., in a transverse direction, dependent on a position.

A microscope for imaging a sample comprises an illumination unit according to the disclosure; a detector for detecting light emitted by the sample; and a processing and control unit for providing the control signals and processing the light emitted by the sample. The microscope enables imaging with 1 $\mu$s shifting times and high spatial resolution.

The microscope may further comprising a lens and a pinhole for confocally projecting the light collected from the sample onto the detector. The confocal projection of the light onto the detector reduces background noise.

A method of illuminating a sample in a microscope comprises providing an illumination light beam by means of a laser light source; shaping the illumination light beam; illuminating the sample by means of an objective lens. The beam shaping arrangement comprises generating a first phase shift between two orthogonal polarization components of the illumination light beam by means of a phase retarder; rotating, dependent on a position in a cross-section of the illumination light beam, by means of a spatially variable birefringent element, the two orthogonal polarization components of the illumination light beam; and polarizing the illumination light beam by means of a second polarizer.

The generating of the first phase shift may comprise setting and/or adjusting the first phase shift by means of control signals applied to the phase retarder.

The method may further comprise switching the electric signals within less than 1 microsecond.

The method may further comprising detecting light emitted by the sample by means of a detector.

The method may further comprise providing the control signals and processing the light emitted by the sample.

The method may further comprise confocally focusing the light emitted by the sample onto a pinhole and the detector.

The microscope is simple and uses few robust and affordable components. As one illumination light beam is used and a phase pattern is encoded in the polarization of the illumination light beam, no splitting of the illumination light beam occurs. This results in a stable and robust setup, which is very important considering the nanometer resolution of MINFLUX. Furthermore, phase drift is minimized as the illumination light beam is not physically separated.

The microscope according to the present disclosure produces small PSFs, which facilitates imaging with stronger background noise or imaging of dense samples.

The microscope according to the present disclosure is expected to come at a lower cost than commercially available solutions (donut for 2D, top hat for 3D, deformable mirror), with components of the microscope being less costly than in the commercially available solutions. The quality of the imaging performance is expected to be high.

The microscope is directly useable for multiple colors without the danger of drifts between the color channels. Such drafts are an unavoidable problem when separate beam paths for different colors are used, as is common in the commercially available MINFLUX solutions.

An implementation using a phase-shifting segmented element (continuous SLM) is also possible.

## Description of the drawings

FIG. 1 shows an illumination unit according to a first aspect of the disclosure. The bottom of FIG. 1 shows polarization diagrams for stages of the illumination light beam passing through the shown beam shaping arrangement 20.

FIG. 2 shows an illumination unit according to a second aspect of the disclosure.

FIG. 3 shows, for x-, y-, and z-directions, on/off-patterns (phase patterns) for elements of a spatial light modulator as well as corresponding Illumination intensity patterns 35 (point-spread-functions, PSFs) generated at a sample position in a plane transverse to the illumination light beam.

FIG. 4 shows profiles along the y-direction of the two-lobed illumination intensity pattern 35 (PSF) of FIG. 3 for the y-direction, measured by pixels of a camera, for a series of first phase shifts. The right inset shows a portion around a minimum of the two-lobed illumination intensity pattern 35 along the y-direction. The left inset indicates, by means of the white dashed lines, the range of pixels in the x-direction, for which the profile is constructed by integration in the x-direction, to reduce noise. The x-axis indicates pixels of the camera along the y-direction.

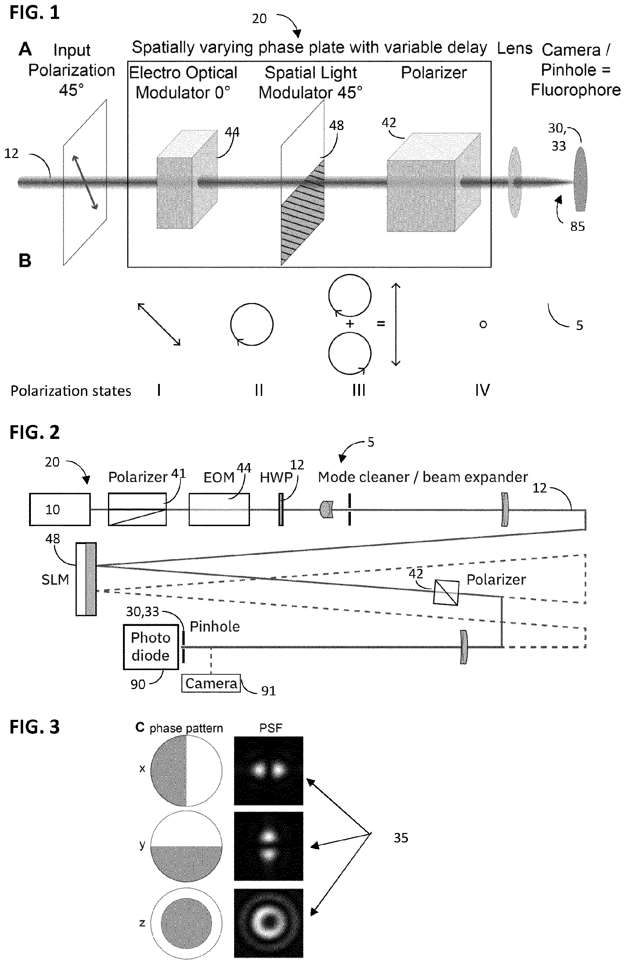

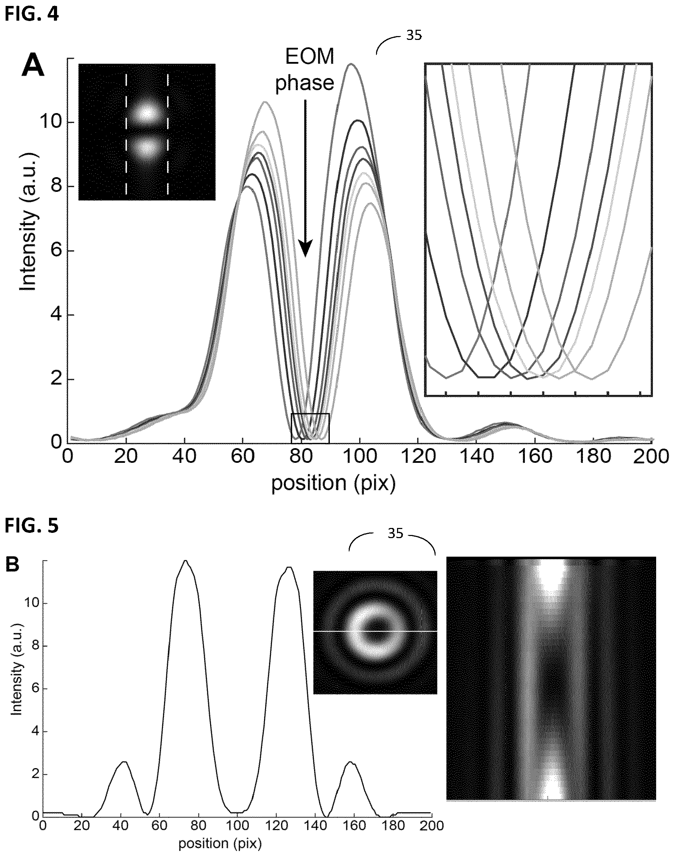

FIG. 5 shows a profile of the top-hat illumination intensity pattern 35 (PSF) of FIG. 3 for the x-direction, measured by the pixels of the camera, along the x-direction. The small inset indicates the white continuous line in the x-direction for which the illumination intensity is shown. The x-axis indicates pixels of the camera along the x-direction The minimum of the top-hat Illumination intensity pattern 35 shifts along the z-direction (the optical axis at the sample position) depending on the amount of the first phase shift generated by the phase retarder. The large inset on the right shows for a series of control signals (voltages applied to the phase retarder), indicated on the vertical axis, a stack line cuts (along selected x) of images of an x-z-plane of the illumination pattern, recorded by a camera 91.

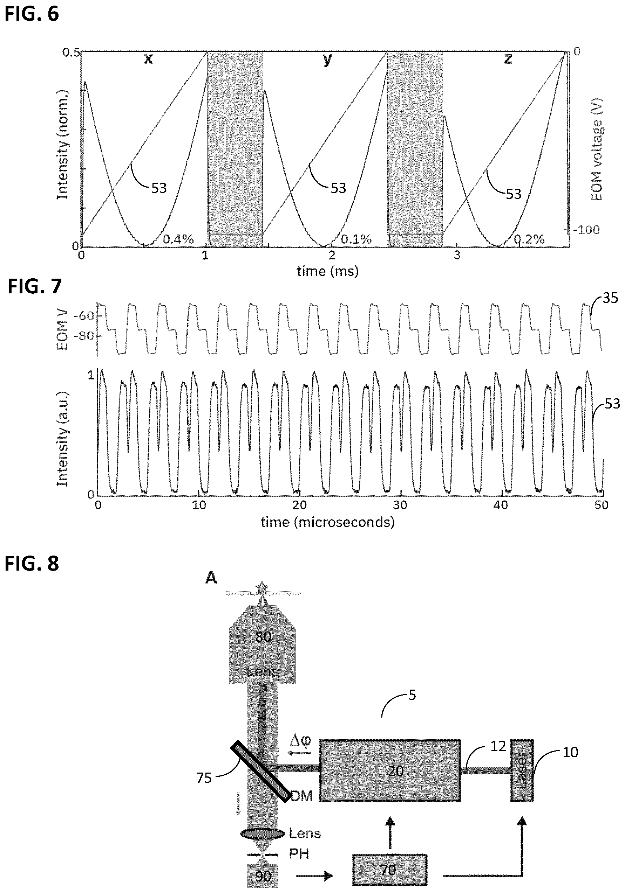

FIG. 6 shows detected illumination light intensities measured at a detector, placed after a 10 $\mu$m pinhole at the focus of the lens, for a scanning of the illumination intensity patterns 35 (PSFs) along the x-, y-, and z-directions along the x-, y-, and z-directions, respectively, by means of a series of first phase shifts imposed by the phase retarder on the illumination light beam. The curves with the convex portions shows the measured intensity at the sample position. The curves with the substantially linear portions show control signals (voltage signals) 53 applied to the phase retarder, which in the shown case is an electro-optic modulator, for scanning the illumination intensity patterns 35 in the x-, y-, and z-directions, respectively. The top portion shows a sequence of one scan in the x-direction, one scan in the y-direction, and one scan in the z-direction, each taking place over a period of 1 millisecond (1ms).

FIG. 7 shows an example of rapid scanning of the illumination pattern 35 about the sample position 33 in the x-direction.

FIG. 8 shows a microscope according to the disclosure.

## Detailed description

The present disclosure relates to an illumination unit for use in optical applications. One example of the optical applications is microscopy. In particular, the illumination unit is useful for variants of microscopy, in which a patterned illumination light beam 12 with an intensity minimum (also termed "zero") is scanned around a sample located at a sample position. One example of such variant of microscopy is the so-called MINFLUX microscopy.

FIG. 8 (adapted from Wolff et al.) shows an example of a microscope 100 according to the disclosure that may be used for MINFLUX microscopy. The microscope 100 comprises a laser light source 10 for generating an illumination light beam 12, e.g., a 640 nm laser beam.

The microscope 100 further comprises a beam shaping arrangement 20 for shaping the illumination light beam 12. The beam shaping arrangement 20 generates at an illumination focus 85 of an objective lens 80, based on interference, an illumination intensity pattern 35, to illuminate a sample 30 arranged at a sample position 33.

The interference may involve making components of the illumination light beam 12 interfere at the illumination focus 85. The components of the illumination light beam 12 may have a phase shift relative to each other, leading to the interference of the components. The interference may include constructive interference and destructive interference. The constructive interference and the destructive interference may result in the illumination intensity pattern 35.

The components of the illumination light beam 12 may comprise two polarization components relating to two polarization states, for example, two orthogonal polarization states, of the illumination light beam 12.

The illumination intensity pattern 35 may have an intensity minimum (also termed "zero"). The intensity minimum of the illumination intensity pattern 35 may be generated by the interference of the components, e.g., the two orthogonal polarization components, of the illumination light bam 12. The intensity minimum of the illumination intensity pattern 35 may be shifted by changing the phase shift $\varphi$ produced by the beam shaping arrangement 20.

Light, e.g., fluorescence, emitted (or reflected or scattered) by the sample 30 and collected by the objective lens 80 may pass through a dichroic mirror (DM) 75. The dichroic mirror 75 may furthermore deflect the illumination light beam 12. The light collected by the objective lens 80 is focused onto a confocal pinhole (PH) 93 and detected by a detector 90, e.g., an avalanche photodiode (APD). The detector 90 may be a confocal point detector.

An algorithm for localization and/or detection of x-, y-, and/or z-coordinates (in an x-direction, a y-direction, and/or a z-direction, respectively) is implemented in a processing and control unit 70, e.g., a field programmable gate array (FPGA), for directing the minimum of the Illumination intensity pattern 35 to x-, y-, and/or z-coordinates, e.g., depending on the number of photons detected by the detector 90, for probing a sample position 33 of the sample 30.

The microscope 100 excites the sample 30 by means of the illumination light beam 12. The sample 30 may comprise one or more fluorophore. The illumination light beam 12 may have one or more wavelengths suitable to excite the one or more fluorophores. The intensity minimum (also termed "zero") may be positioned in the sample 30 with sub-nanometer-precision. The closer the intensity minimum is to, e.g., the one or more fluorophores, the lower are the one or more corresponding fluorescence rates. The detected illumination intensity (or number or rate of detected photons) correlates with a distance between the sample position 33 (e.g., the location of the one or more fluorophores) and a position of the intensity minimum. This correlation is described, to good approximation, by a quadratic or parabolic relationship, the steepness (or first derivative) of which depends on a focusing angle, the one or more wavelengths, and a power of the illumination light beam 12. The detected illumination intensity (or number or rate of detected photons) is minimal when it is substantially equal to background values. The sample 30, e.g., the fluorophore, is localized based on knowledge of a location of the intensity minimum. One way of localizing the sample 30, e.g., the fluorophore, is by detecting the illumination intensity for two or more positions of the intensity minimum and estimating, based on the quadratic or parabolic relationship, the intensity minimum.

FIG. 1 shows an illumination unit 5 according to a first aspect of the disclosure. The illumination unit 5 comprises the laser light source 10 for providing the illumination light beam 12.

The illumination unit 5 further comprises the objective lens 80 for illuminating a sample 30. The objective lens 80 projects the illumination light beam 12 to the illumination focus 85 at the sample position 33 of the sample 30.

The illumination unit 5 further comprises the beam shaping arrangement 20 for shaping the illumination light beam. The illumination light beam 12 may have a polarization, e.g., a linear, circular, or elliptical polarization, after exiting the laser light source 10. Alternatively, the beam shaping arrangement 20 may comprise a first polarizer 41 for polarizing the illumination light beam 12. In one aspect, the first polarizer 41 may linearly polarize the illumination light beam 12 at, e.g., an angle of 45° with respect to a vertical direction or horizontal direction (see FIG. 3). However, the first polarizer 41 may likewise circularly or elliptically polarize the illumination light beam 12.

The illumination unit 5 further comprises a phase retarder 44 for generating a first phase shift between the components of the illumination light beam 12, e.g., between two polarization components of the illumination light beam 12, the two polarization components relating to two polarization states, for example, two orthogonal polarization states, of the illumination light beam 12.

The phase retarder 44 may comprise at least one Pockels cell. The at least one Pockels cell may comprise a nonlinear crystal. The nonlinear crystal may be made of, for example, potassium di-deuterium phosphate (DKDP), potassium titanyl phosphate (KTP), β-barium borate (BBO) which is suitable for higher average powers and/or higher switching frequencies of control signals 53 (see FIG. 6), lithium niobate (LiNbO3), lithium tantalate (LiTaO3), or ammonium dihydrogen phosphate (NH4H2PO4, ADP).

The at least one Pockels cell of the phase retarder 44 may operate based on the linear electro-optic effect (also called the Pockels effect). The linear electro-optic effect describes a modification of a refractive index of the at least one Pockels cell by an electric field, acting on the at least one Pockels cell, in proportion to an electric field strength of the electric field. The electric field strength of the electric field may be applied to the at least one Pockels cell by means of the electric signals or control signals 53.

The control signals 53 may be applied by means of a driver. The driver controls the strength and frequency of the control signals (electric signals) 53. Switching with fall times below 10 nanoseconds can be achieved by the driver. Fast switching of the electric signals 53 in the sub-microsecond range enables rapid scanning of the illumination intensity patterns 35 around the sample position 33 (see FIGS. 4, 6, and 7 as well as the corresponding description). FIG. 7 shows measured intensities (bottom time curve) at three different EOM voltages (top time curve), representing a 3-point intensity measurement along the x-direction. Each intensity measurement only lasts approximately for 1 microsecond. In other words, the 3-point measurement is performed in approximately 3 microseconds, which demonstrates the scanning rates in the MHz-range achievable according to the present disclosure.

Thermal influences may result in a drift of the operation point, possibly requiring recalibration such as by adjusting a bias voltage. The processing and control unit 70 may be used to set a bias voltage based on optical properties of the phase retarder 44.

The phase retarder 44 may be a uniaxial birefringent optical element with an optic birefringence axis. In particular, the phase retarder 44 may be a uniaxial birefringent optical element with an optic birefringence axis, the phase retarder 44 having the above-described electro-optic properties which enable changing, setting, and/or adjusting the first phase shift. The uniaxial birefringent optical element has a fast axis and a slow axis. The difference in the refractive index for light traveling along the fast axis or along the slow axis generates the first phase shift.

The birefringent axis of the phase retarder 44 shown in FIG. 1 may be oriented vertically. However, different ones of the orientation are readily conceivable. The orientation may depend on the material (e.g., the nonlinear crystal) used for the phase retarder 44. In the aspect shown in FIGS. 1 and 2, the phase retarder has the birefringent axis oriented either vertically or horizontally.

The action of the phase retarder 44 on the two polarization components relating to two, e.g., orthogonal, polarization states of the illumination light beam 12 can be described by a Jones matrix. For instance, if the phase retarder 44 is a uniaxial birefringent quarter-wave plate with the fast axis being oriented vertically, the Jones matrix J reads

$$e^{i\pi/4}\begin{pmatrix} 1 & 0 \\ 0 & -i \end{pmatrix}$$

. If, on the other hand, the phase retarder 44 is a uniaxial birefringent quarter-wave plate with the fast axis being oriented horizontally, the Jones matrix J reads $e^{-i\pi/4}\begin{pmatrix} 1 & 0 \\ 0 & i \end{pmatrix}$ . For any other angle $\theta$ of the fast axis of the quarter-wave plate with respect to a horizontal axis, the Jones matrix J reads $e^{-i\varphi/2}\begin{pmatrix} 1 & 0 \\ 0 & e^{i\varphi} \end{pmatrix}$ or simply

$\begin{pmatrix} 1 & 0 \\ 0 & e^{i\varphi} \end{pmatrix}$ , depending on how the first phase shift $\varphi$ is calculated.

In the example shown in FIG. 1, the effect of the phase retarder 44 on the illumination light beam 12, which enters the phase retarder 44 being linearly polarized at an angle of 45°, is that the illumination light beam 12 leaves the phase retarder 44 circularly polarized (see bottom of FIG. 1). By applying the control signals 53 (see FIG. 6), the first phase shift may be altered, such that the illumination light beam 12 leaves the phase retarder 44, e.g., elliptically or linearly polarized.

The illumination unit 5 further comprises a spatially variable birefringent element 48 having a spatially varying birefringence. The spatially variable birefringent element 48 comprises a segmented wave plate or a spatial light modulator (SLM) 48. The spatially variable birefringent element 48 may be positioned with respect to the illumination light beam 12 such that, dependent on a cross-sectional (or transverse) position of the illumination light beam 12, a rotation of the two polarization components of the illumination light beam 12 is generated. In one aspect, the spatially variable birefringent element 48 may have a temporally static, spatially varying birefringence. In another aspect, the spatially variable birefringent element 48 may have temporally varying and spatially varying birefringence (spatiotemporally varying birefringence).

One example of the spatially variable birefringent element 48 having spatiotemporally varying birefringence is an SLM based on liquid crystals. The spatially variable birefringent element 48 may be a transmissive SLM (as shown in FIG. 1) or a reflective SLM (as shown in FIG. 2). The SLM 48 may comprise a layer of nematic liquid crystals. The SLM 48 may further comprise at least one electrode layer having a plurality of electrodes (not shown). Applying electric fields by means of the plurality of electrodes arranged on a surface of the SLM enables locally (i.e., at a position of a corresponding one of the electrodes) changing an orientation of the liquid crystals. The local (i.e., at the position of the corresponding one of the electrodes) orientation of the liquid crystals determines the local birefringence of the SLM. The electrode layer may be spatially structured. The spatial structuring results in the SLM 48 having a plurality light-modulating elements (also termed pixels) that are individually electrically controllable. For instance, in the case the SLM 48 is a binary SLM with an on-state and an off-state for any one of the plurality of individually controllable pixels, any one of the plurality of individually controllable pixels may be switched at least to either the on-state or the off-state. The spatial structuring of the electrode layer enables spatially varying effects of the SLM 48 on the illumination light beam 12 by individually controlling the plurality of pixels. A dynamic response time of the SLM 48 may vary between 1 to 100 ms for 10-90% rise and fall times for SLMs on the market. Binary SLMs with rise times of 40 $\mu$s and frequencies of up to 3.2 kHz in switching patterns are also available as the SLM 48.

In one example of the aspect shown in FIG. 1, on-pixels of plurality of individually controllable pixels of the binary SLM 48, which are in the on-state, may be oriented at an angle of 45° (with respect to the horizontal axis). Off-pixels of plurality of individually controllable pixels, which are in the off-state, may be oriented vertically. By dividing the plurality of individually controllable pixels into the on-pixels and the off-pixels, on/off-patterns (phase patterns) of the SLM 48 may be generated (see FIG. 3).

In one example of the aspect shown in FIG. 1, any selected one of the on-pixels may rotate one of the two polarization components of the illumination light beam 12, impinging on that selected one of the on-pixels, by 90°. In this example, any selected one of the off-pixels leave the two polarization components of the illumination light beam 12, impinging on that selected one of the off-pixels, unchanged.

The beam shaping arrangement 20 further comprises a second polarizer 42 for polarizing the illumination light beam 12. In one aspect, the second polarizer 42 may linearly polarize the illumination light beam 12. The second polarizer 42 may be a polarizing beam splitter (PBS).

FIG. 3 shows, for x-, y-, and z-directions, examples of on/off-patterns (phase patterns) for the plurality of elements (pixels) of the SLM 48 as well as corresponding Illumination intensity patterns 35 (point-spread-functions, PSFs) generated at the illumination focus 85 at the sample position 33.

FIG. 3 shows a cross-sectional view of the illumination intensity patterns 35 in a plane transverse to the illumination light beam 12. For the x-direction, a two-lobed Illumination intensity pattern 35 having two maxima, located along the x-direction and having one minimum located therebetween, is shown in FIG. 3. For the y-direction, a two-lobed illumination intensity pattern 35 having two maxima, located along the y-direction and having one minimum located therebetween, is shown in FIG. 3. For the z-direction, a top-hat illumination intensity pattern 35 having a maximum, located in a substantially circular manner around a minimum, is shown in FIG. 3.

It will be understood that different ones of the on/off-patterns, different from the examples of the on/off-patterns shown in FIG. 3, may be generated for the plurality of elements (pixels) of the SLM 48. Ones of the on/off-patterns for the plurality of elements (pixels) of the SLM 48 are useful for MINFLUX microscopy that result in the illumination intensity pattern 35 having an intensity minimum at the illumination focus 85 for either the x-, the y-, or the z-direction. Furthermore, moving the intensity minimum, produced by the ones of the on/off-patterns, by means of altering the first phase shift generated by the phase retarder 44 will enable localizing the sample 30, e.g., the fluorophore.

For the x-direction, a two-lobed Illumination intensity pattern 35 having two maxima, located along the x-direction and having one minimum located therebetween, is shown in FIG. 3. For the y-direction, a two-lobed Illumination intensity pattern 35 having two maxima, located along the y-direction and having one minimum located therebetween, is shown in FIG. 3. For the z-direction, a top-hat Illumination intensity pattern 35 having a maximum, located in a substantially annular manner around a minimum, is shown in FIG. 3.

The action of the beam shaping arrangement 20 may be explained, by way of example, in the following terms and is shown diagrammatically at the bottom of FIG. 1. The phase retarder 44 results in the first phase delay having in this example a value of 90°. In this example, one of the two polarization components of the illumination light beam 12 relating to the two, e.g., orthogonal, polarization states of the illumination light beam 12 (e.g., the p-polarization component) is delayed with respect to the other of the two polarization components (the s-polarization component in this example) by the first phase delay, leading to the illumination light beam 12 having a circular polarization (see polarization state I in FIG. 1). The SLM 48 subsequently rotates, by means of the on-pixels, the p-polarization and the s-polarization by 90°, resulting in the p-polarization becoming the s-polarization and vice versa, for the portion of the illumination light beam 12 impinging on the on-pixels (see polarization state II in FIG. 1). On the other hand, the combined action of the phase retarder 44 and the off-pixels of the SLM 48 on the illumination light beam 12 leaves the s-polarization component of the illumination light beam 12 unchanged (see polarization state III in FIG. 1). The second polarizer 42 transmits in this example the s-polarization component and blocks the p-polarization component (see polarization state IV in FIG. 1). Thus, for the on-pixels, the second polarizer 42 transmits the s-polarization component having the phase imposed by the phase retarder 44 and by the SLM 48 on the illumination light beam 12. For the off-pixels, on the other hand, the second polarizer 42 transmits the s-polarization component having the unchanged phase of the illumination light beam 12 (i.e., the phase of the illumination light beam 12 before passing through the phase retarder 44 and the SLM 48).

Calculations using Jones Matrices that confirm this effect. show that for the configuration in Fig. 1, the on-pixels

$$E_{on} = \frac{1}{\sqrt{2}} E_0 \exp i \left( \varphi - \frac{\xi}{2} \right) \qquad\qquad E_{off} = \frac{1}{\sqrt{2}} E_0 \exp i \frac{\xi}{2}$$

produce a field . The off-pixels produce a field , where $E_0$ is a reference electric field, $\varphi$ is the phase imposed by the phase retarder 44, $\xi$ is an additional phase difference between $E_{off}$ and $E_{on}$, caused by different path lengths, due to, for instance, optical paths off the optical axis or the illumination focus 85. When both beams interfere at the illumination focus 85 of the objective lens 80, the intensity is given by $I = |E_{off} + E_{on}|^2 = E_0^2 \sin(\varphi - \xi) + 1$.

The illumination unit 5 can accommodate for optical elements that have differing properties (as shown by way of example in FIG. 2). For example, the SLM 48 may have its birefringent axis for the on-pixels oriented at 37° (other values are possible as well) instead of at 45°. By introducing an additional birefringent optical element 49, e.g., a half wave plate (see FIG. 2), along the path of the illumination light beam 12, e.g., in front of the SLM 48, the illumination intensity pattern 35 described above can also be achieved.

As shown in FIG. 2, in a further aspect of the disclosure, the ilumination light beam 12 may impinge twice on the SLM 48.

Additionally, commonly used mirrors introduce a phase delay between s- and p-polarization. Such delay may be readily corrected, e.g., by subtracting the phase delay generated by the mirrors from the first phase delay produced by the phase retarder 44. A phase retarder 44 with the birefringent axis being arranged vertically or horizontally facilitates such correction.

In one aspect, the SLM 48 is a binary SLM and alternates between "inverse" phase patterns (see, e.g., FIG. 3; on-pixels becoming off-pixels, and vice versa). The shape of the illumination pattern may remain the same, with only the polarization axes changing. As only relative phases between the on-pixels and the off-pixels matter, a value of the first phase shift generated by the phase retarder 44 can be found that creates the original phase delay. This enables maintaining the duty cycle of the illumination unit 5.

## List of reference numerals

| 5 | Illumination unit |
|---|---|
| 10 | Laser light source |
| 12 | Illumination light beam |
| 20 | Beam shaping arrangement |
| 30 | Sample |
| 33 | Sample position |
| 35 | Illumination intensity pattern |
| 41 | First polarizer |
| 42 | Second polarizer |
| 44 | Phase retarder |
| 48 | Spatially variable birefringent element |
| 49 | Additional birefringent element |
| 53 | Control signals, Electric signals, Voltage signals |
| 70 | Processing unit |
| 75 | Dichroic mirror (DM) |
| 80 | Objective lens |
| 85 | Illumination focus |

(continued)

| 90 | Detector |
|-----|-----------------|
| 93 | Confocal pinhole |
| 100 | Microscope |

**Claims**

1. An illumination unit (5) for a microscope, comprising

   a laser light source (10) for providing an illumination light beam (12);
   an objective lens for illuminating a sample (30); and
   a beam shaping arrangement (20) for shaping the illumination light beam (12); wherein the beam shaping arrangement (20) comprises

   - a phase retarder (44) for generating a first phase shift between two orthogonal polarization components of the illumination light beam (12);
   - a spatially variable birefringent element (48) for rotating, dependent on a cross-sectional position of the illumination light beam (12), the two orthogonal polarization components of the illumination light beam (12); and
   - a second polarizer (42) for polarizing the illumination light beam (12).

2. The illumination unit (5) of claim 1, wherein the phase retarder (44) is an electro-optic modulator and the first phase shift is settable and/or adjustable by means of control signals (53) applied to the phase retarder (44).

3. The illumination unit (5) of claim 2, wherein the control signals (53) are switchable within less than 1 microsecond.

4. The illumination unit (5) of any one of claims 1 to 3, wherein the spatially variable birefringent element (48) comprises an array of elements.

5. A microscope for imaging a sample (30), comprising

   an illumination unit (5) of any one of claims 1 to 4;
   a detector (90) for detecting light emitted by the sample (30);
   a processing and control unit (70) for providing the control signals (53) and processing the light emitted by the sample (30).

6. The microscope of claim 5, further comprising a lens (92) and a pinhole (93) for confocally projecting the light collected from the sample (30) onto the detector (90).

7. A method of illuminating a sample (30) in a microscope, comprising

   providing an illumination light beam (12) by means of a laser light source (10);
   shaping the illumination light beam (12);
   illuminating the sample (30) by means of an objective lens ;
   wherein the beam shaping arrangement (20) comprises

   - generating a first phase shift between two orthogonal polarization components of the illumination light beam (12) by means of a phase retarder (44);
   - rotating, dependent on a position in a cross-section of the illumination light beam (12), by means of a spatially variable birefringent element (48), the two orthogonal polarization components of the illumination light beam (12); and
   - polarizing the illumination light beam (12) by means of a second polarizer (42).

8. The method of claim 7, wherein the generating of the first phase shift comprises setting and/or adjusting the first phase shift by means of control signals (53) applied to the phase retarder (44).

9.  The method of claim 8, further comprising switching the electric signals (53) within less than 1 microsecond.

10. The method of any one of claims 7 to 9, further comprising detecting light emitted by the sample (30) by means of a detector (90).

11. The method of any one of claims 7 to 10, further comprising providing the control signals (53) and processing the light emitted by the sample (30).

12. The method of any one of claims 7 to 11, further comprising confocally focusing the light emitted by the sample (30) onto a pinhole (93) and the detector (90).

# FIG. 1

**A** Input Polarization 45°

Spatially varying phase plate with variable delay · Lens · Camera / Pinhole = Fluorophore

Electro Optical Modulator 0° · Spatial Light Modulator 45° · Polarizer

**B**

Polarization states    I        II        III        IV

# FIG. 2

Polarizer · EOM · HWP · Mode cleaner / beam expander · SLM · Polarizer · Photo diode · Pinhole · Camera

# FIG. 3

C phase pattern    PSF

x

y

z

**FIG. 4**

**FIG. 5**

**FIG. 6**

**FIG. 7**

**FIG. 8**

Europäisches
Patentamt
European
Patent Office
Office européen
des brevets

# EUROPEAN SEARCH REPORT

**Application Number**

EP 23 19 3790

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 167 011 A1 (ABBERIOR INSTRUMENTS GMBH [DE]) 19 April 2023 (2023-04-19) * paragraphs [0029], [0030], [0047], [0049], [0081] – [0114]; figures 1-6 * ----- | 1-12 | INV. G02B21/00 G02B21/06 G02B21/16 G02B27/58 G02B27/09 |
| X | EP 4 167 010 A1 (ABBERIOR INSTRUMENTS GMBH [DE]) 19 April 2023 (2023-04-19) * paragraphs [0001], [0051], [0058], [0062], [0065], [0072], [0088], [0106] – [0129]; figures 1A,1B,5A,6,7,8 * ----- | 1,7 | ADD. G01N21/64 |

TECHNICAL FIELDS
SEARCHED (IPC)

G02B
G01N

The present search report has been drawn up for all claims

| Place of search | Date of completion of the search | Examiner |
|---|---|---|
| Munich | 24 January 2024 | Duijs, Eric |

EPO FORM 1503 03.82 (P04C01)

## ANNEX TO THE EUROPEAN SEARCH REPORT
## ON EUROPEAN PATENT APPLICATION NO.

EP 23 19 3790

This annex lists the patent family members relating to the patent documents cited in the above-mentioned European search report.
The members are as contained in the European Patent Office EDP file on
The European Patent Office is in no way liable for these particulars which are merely given for the purpose of information.

24-01-2024

| Patent document cited in search report | | Publication date | Patent family member(s) | | Publication date |
|---|---|---|---|---|---|
| EP 4167011 | A1 | 19-04-2023 | EP | 4167011 A1 | 19-04-2023 |
| | | | WO | 2023062107 A1 | 20-04-2023 |
| EP 4167010 | A1 | 19-04-2023 | EP | 4167010 A1 | 19-04-2023 |
| | | | WO | 2023062099 A1 | 20-04-2023 |

EPO FORM P0459

For more details about this annex : see Official Journal of the European Patent Office, No. 12/82